# DEMANDE DE BREVET EUROPEEN

(11) **EP 0 957 549 A1**
(43) Date de publication de la demande: **17.11.1999**
(21) Numéro de dépôt: 99410067.5
(22) Date de dépôt: 06.05.1999
(51) Int. Cl.: H02G 1/08

(54) **Dispositif tire-câble pour l'insertion d'un câble ou conducteur électrique dans une gaine allongée**

(30) Priorité: 13.05.1998 FR 9806264
(71) Demandeur: Leon, Jean, 73470 Marcieux (FR)
(72) Inventeur: Leon, Jean, 73470 Marcieux (FR)
(74) Mandataire: Hecké, Gérard

(57) **Abrégé**

Un dispositif tire-câble 10 pour l'introduction d'un câble 14 dans une gaine 16 allongée, comporte un élément support 12 composé d'une première pièce de guidage 24 en forme de coulisseau équipé de trous 32 à l'opposé de moyens d'accrochage 22 d'un organe de tirage 18, et d'une deuxième pièce de verrouillage 26 à logements 36 pour autoriser le vrillage du câble 14 dans l'intervalle d séparant les deux pièces 24, 26.

## Description

L'invention est relative à un dispositif tire-câble pour l'introduction d'un câble dans une gaine allongée par l'intermédiaire d'un organe de tirage, ledit dispositif comportant :
- un élément support agencé pour coulisser à travers la gaine tubulaire lors d'un effort de traction exercé sur l'organe de tirage,
- des moyens d'accrochage pour fixer l'organe de tirage à l'élément support,
- et des moyens d'introduction du câble dans des trous ménagés dans l'élément support.

Un tel dispositif est généralement utilisé dans le domaine du bâtiment pour l'introduction d'un faisceau de câbles ou conducteurs électriques dans une gaine ou conduit tubulaire de l'installation électrique. Divers moyens de blocage ont déjà été proposés pour solidariser le câble à l'élément support après son introduction dans les trous. Dans un premier mode de réalisation connu, les moyens de blocage passent d'une position active à une position inactive par l'intermédiaire d'un système de rappel élastique, notamment un ressort. Dans un autre mode de réalisation connu, la paroi du l'élément support est déformée par compression radiale après l'introduction du câble dans l'ouverture selon une direction axiale. De tels dispositifs ne permettent pas d'obtenir un verrouillage positif du câble, avec des risques de décrochage en cas de forces de traction importantes exercées sur le dispositif de tirage.

L'objet de l'invention consiste à réaliser un dispositif tire-câble de constructon simple et bon marché, pouvant s'adapter à tout type de gaines, avec un verrouillage positif du câble empêchant le décrochage lors de son entraînement par le dispositif de tirage.

Le dispositif tire-câble selon l'invention est caractérisé en ce que :
- l'élément support est composé d'une première pièce de guidage en forme de coulisseau équipé desdits trous à l'opposé des moyens d'accrochage, et d'une deuxième pièce de verrouillage reliée coaxialement au coulisseau au moyen d'une liaison mécanique,
- et une pluralité de logements sont disposés dans ladite deuxième pièce de verrouillage pour autoriser le vrillage du câble dans l'intervalle séparant les deux pièces.

Selon un premier mode de réalisation, la deuxième pièce de verrouillage est agencée en barillet rotatif autorisant un mouvement relatif de pivotement entre une position de déblocage et une position de blocage pour assurer le vrillage du câble dans ledit intervalle. Le verrouillage positif du câble à l'élément support intervient simplement en faisant pivoter le barillet vers la position de blocage, provoquant une déformation permanente du câble en empêchant son retrait lorsqu'une traction est exercée sur l'organe de tirage.

Selon une caractéristique de l'invention, les logements tubulaires sont répartis à intervalles réguliers autour de l'axe longitudinal du barillet, en nombre égal à celui des trous de la première pièce de guidage. La liaison mécanique est formée par une tige filetée solidaire de l'une des pièces, et coopérant avec un taraudage ménagé dans la partie centrale de l'autre pièce. Les trous de la première pièce de guidage sont borgnes, alors que les logements traversent de part et d'autre le corps du barillet. L'intervalle axial entre les deux pièces est agencé pour contrôler visuellement le vrillage du câble lors du déplacement du barillet vers la position de blocage.

Selon une autre caractéristique de l'invention, le pivotement du barillet dans le sens du blocage est choisi pour réduire la largeur de l'intervalle lors du vrillage du câble. La course angulaire du barillet entre la position de déblocage et la position de blocage, et vice-versa, dépend de la rigidité mécanique et du nombre de conducteurs de câble.

Selon un deuxième mode de réalisation, la deuxième pièce de verrouillage est solidarisée à la première pièce de guidage par une liaison mécanique fixe. Les logements de la deuxième pièce de verrouillage sont formés par des encoches radiales semi-ouvertes, autorisant un vrillage par déformation manuelle du câble dans l'intervalle suite à son insertion dans une encoche du logement avec un certain décalage angulaire. Le décalage angulaire est formé par un secteur séparant au moins deux ou plusieurs encoches de la deuxième pièce de verrouillage, alors que les deux pièces restent fixes durant le vrillage.

D'autres avantages et caractéristiques de l'invention ressortiront plus clairement de la description qui va suivre d'un mode de réalisation donné à titre d'exemple non limitatif, et représenté au dessin annexé dans lequel :
- la figure 1 est une vue schématique en perspective du dispositif tire-câble selon l'invention, l'élément support étant représenté en position de déblocage pour l'introduction de câble;
- la figure 2 montre une vue identique de la figure 1 en position de blocage du câble;
- la figure 3 est une vue en coupe axiale de l'élément support du dispositif tire-câble.
- les figures 4-6 sont des vues identiques du dispositif tire-câble des figures 1-3 d'une variante de réalisation.

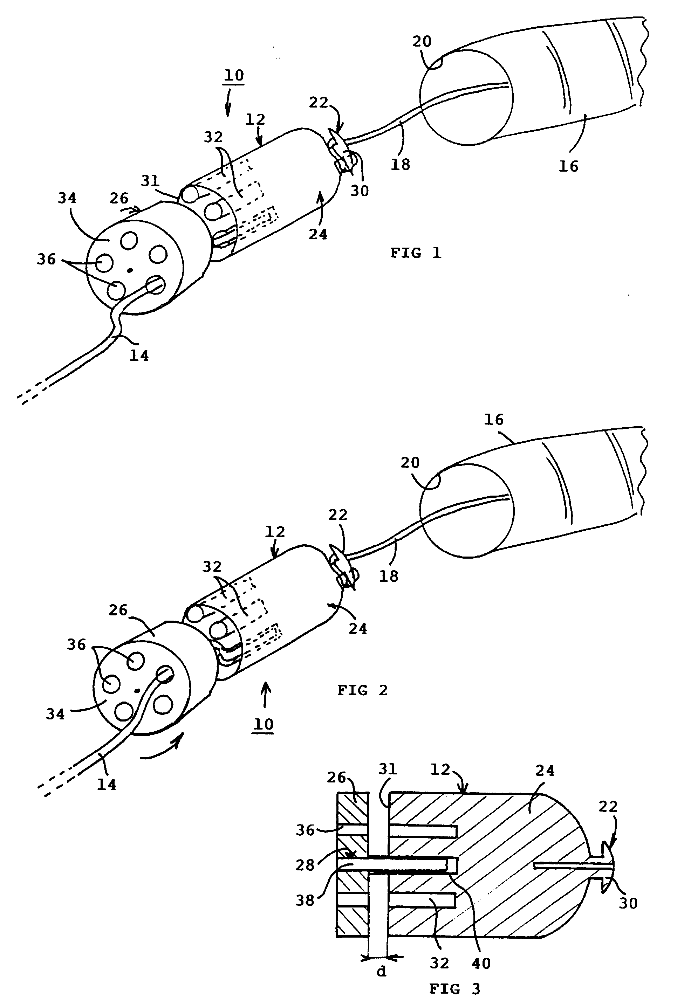

En référence aux figures 1 à 3, un dispositif tire-câble, désigné par le repère général 10, comporte un élément support 12 de forme cylindrique destiné à entraîner un câble 14 dans une gaine 16 allongée par l'intermédiaire d'un organe de tirage 18. La section de l'élément support 12 est inférieure au diamètre interne de la gaine 16 de manière à faciliter le coulissement longitudinal à travers le conduit interne de la gaine 16 lors de la traction exercée sur l'organe de tirage 18. Le câble 14 comprend un ou plusieurs conducteurs rigides ou semi-rigides, notamment en cuivre, pouvant être enrobés individuellement par un revêtement isolant.

L'organe de tirage 18 est formé par une aiguille ou un fil métallique logé à l'intérieur de la gaine 16 tubulaire, et ayant une extrémité faisant saillie de l'orifice d'entrée 20 de la gaine 16 pour être solidarisée à des moyens d'accrochage 22 de l'élément support 12.

L'élément support 12 est composé d'une première pièce de guidage 24 en forme de coulisseau, et d'une deuxième pièce de verrouillage 26, lesquelles sont reliées coaxialement entre elles au moyen d'une liaison mécanique 28 réglable autorisant un mouvement relatif de pivotement entre une position de déblocage et une position de blocage du câble 14.

La partie antérieure de la première pièce de guidage 24 est légèrement arrondie, et est dotée d'une tête de retenue 30 constituant les moyens d'accrochage 22. La face opposée 31 est percée par une série de trous 32 borgnes permettant l'introduction des extrémités des conducteurs du câble 14 selon une direction longitudinale parallèle à l'axe de la première pièce de guidage 24.

La deuxième pièce de verrouillage 26 est agencée selon un barillet 34 rotatif présentant une longueur axiale inférieure à celle de la première pièce de guidage 24, en étant doté d'une pluralité de logements 36 identiques traversant de part et d'autre le corps du barillet 34. La liaison mécanique 28 comprend à titre d'exemple une tige filetée 38 solidaire du barillet 34, et vissée dans un taraudage 40 central débouchant de la face 31 de la première pièce de guidage 24.

Un intervalle axial *d* sépare les deux pièces 24, 26 constitutives de l'élément support 12, et permet de contrôler visuellement la déformation du câble 14 lors du déplacement du barillet 34 de la position de déblocage vers la position de blocage. Les logements 36 de formes tubulaires sont régulièrement répartis autour de l'axe longitudinal du barillet 34, en nombre égal à celui des trous 32 de la première pièce de guidage 24.

La mise en oeuvre du dispositif tire-câble 10 selon l'invention s'effectue de la manière suivante :

Les figures 1 et 2 montrent l'exemple d'un câble 14 à un seul conducteur, mais il est possible de tirer plusieurs conducteurs selon le nombre de logements 36 et trous 32.

Sur la figure 1, l'introduction du câble 14 dans l'élément support 12 est opéré lorsque la deuxième pièce de verrouillage 26 se trouve en position de déblocage correspondant à l'alignement axial des logements 36 du barillet 34 avec les trous 32 borgnes de la première pièce de guidage 24. Il suffit d'enfiler le câble 14 à travers un logement 36, et de l'enfoncer dans le trou 32 aligné jusqu'à la venue en butée contre le fond. Le sens d'introduction du câble 14 est parallèle à l'axe longitudinal de l'élément support 12.

La fixation définitive du câble 14 à l'élément support 12 intervient ensuite en faisant pivoter le barillet 34 vers la position de blocage ( figure 2). Il en résulte un vrillage et une déformation permanente du câble 14 dans l'intervalle *d* empêchant son retrait lorsqu'une traction est exercée sur l'organe de tirage 18. Le sens de pivotement du barillet 34 est choisi pour diminuer avantageusement l'intervalle *d* lors du passage vers la position de blocage. Cette réduction de l'intervalle *d* verrouille positivement le câble 14 dans l'état déformé, et maintient le barillet 34 dans la position de blocage 34. La course angulaire de barillet 34 dépend de la rigidité mécanique et du nombre de conducteurs traversant les logements 36.

Le fil de l'organe de tirage 18 est finalement enroulé à la tête de retenue 30 du premier élément de guidage 24. Le dispositif tire-câble 10 est alors prêt pour déplacer le câble 14 à travers la gaine 16.

Le dispositif tire-câble 10 peut ensuite être réutilisé pour d'autres installations électriques. A l'aide d'une pince, il suffit de tourner le barillet 34 en sens inverse vers la position de déblocage, et de tirer sur l'extrémité du câble 14 pour l'extraire hors du trou 32 et du logement 36 correspondant.

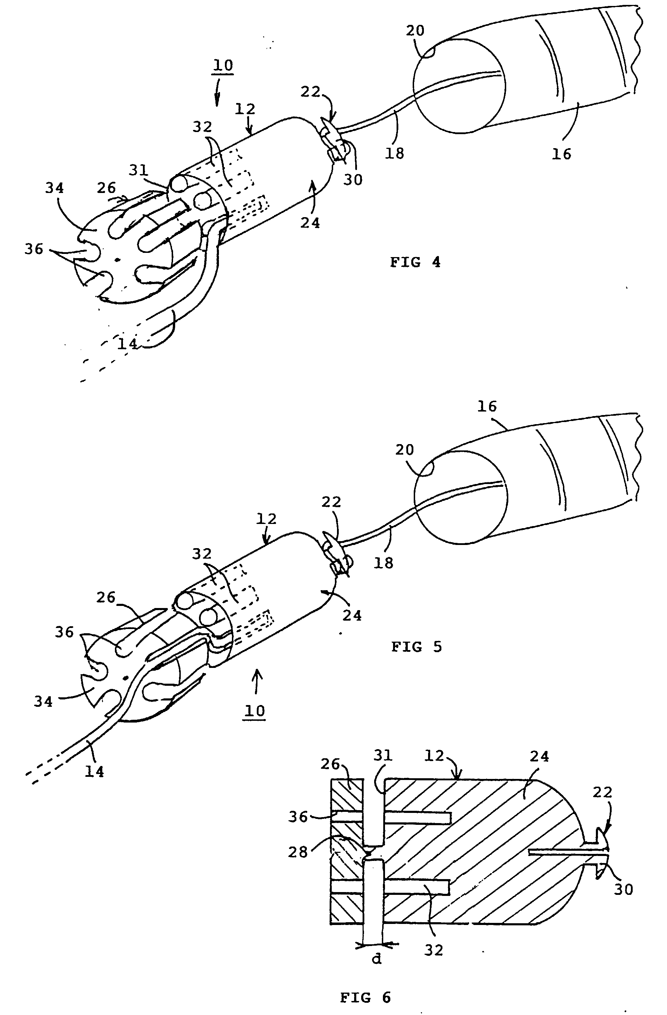

Sur la variante des figures 4-6, la deuxième pièce de verrouillage 26 est solidarisée à la première pièce de guidage 24 par la liaison mécanique 28, formée par une tige intermédiaire fixe. Il n'existe pas de mouvement relatif de pivotement entre les deux pièces 26, 24.

La pièce de guidage 24 est identique à celle de la figure 1 avec des trous borgnes 32, mais les logements 36 de la deuxième pièce de verrouillage 26 sont formés par des encoches radiales semi-ouvertes.

Il suffit d'introduire chaque câble 14 dans un trou 32 borgne de la pièce de guidage 24, et on déforme manuellement le câble 14 dans l'intervalle d en le positionnant dans une encoche du logement 36 avec un certain décalage angulaire. Le câble 14 est constitué par un conducteur en cuivre qui conserve l'état de déformation, le décalage angulaire étant formé par un secteur séparant au moins deux ou plusieurs encoches. Le vrillage du câble 14 est obtenu dans ce cas par une action manuelle de déformation permanente, alors que les deux pièces 26, 24 restent fixes.

## Revendications

1. Dispositif tire-câble (10) pour l'introduction d'un câble (14) dans une gaine (16) allongée par l'intermédiaire d'un organe de tirage (18), ledit dispositif comportant :
- un élément support (12) agencé pour coulisser à travers la gaine (16) tubulaire lors d'un effort de traction exercé sur l'organe de tirage (18),
- des moyens d'accrochage (22) pour fixer l'organe de tirage (18) à l'élément support (12),
- et des moyens d'introduction du câble (14) dans des trous (32) ménagés dans l'élément support (12),
caractérisé en ce que:
- l'élément support ( 12) est composé d'une première pièce de guidage (24) en forme de coulisseau équipé desdits trous (32) à l'opposé des moyens d'accrochage (22), et d'une deuxième pièce de verrouillage (26) reliée coaxialement au coulisseau au moyen d'une liaison mécanique (28),
- et une pluralité de logements (36) sont disposés dans ladite deuxième pièce de verrouillage (26) pour autoriser le vrillage du câble (14) dans l'intervalle (d) séparant les deux pièces (24, 26).

2. Dispositif tire-câble (10) selon la revendication 1, caractérisé en ce que la deuxième pièce de verrouillage (26) est agencée en barillet (34) rotatif autorisant un mouvement relatif de pivotement entre une position de déblocage et une position de blocage pour assurer le vrillage du câble (14) dans ledit intervalle (d).

3. Dispositif tire-câble selon la revendication 1 ou 2, caractérisé en ce que la liaison mécanique (28) est formée par une tige filetée (38) solidaire de l'une des pièces (26), et coopérant avec un taraudage (40) ménagé dans la partie centrale de l'autre pièce (24).

4. Dispositif tire-câble selon la revendication 1 ou 2, caractérisé en ce que les trous (32) de la première pièce de guidage (24) sont borgnes , alors que les logements (36) traversent de part et d'autre le corps du barillet (34) en étant disposés en alignement axial avec les trous (32) du coulisseau dans la position de déblocage pour autoriser l'introduction du câble (14).

5. Dispositif tire-câble selon la revendication 4, caractérisé en ce que les logements (36) tubulaires sont répartis à intervalles réguliers autour de l'axe longitudinal du barillet (34), en nombre égal à celui des trous (32) de la première pièce de guidage (24).

6. Dispositif tire-câble selon la revendication 5, caractérisé en ce que le pivotement du barillet (34) dans le sens du blocage est choisi pour réduire la largeur de l'intervalle (d) lors du vrillage du câble (14).

7. Dispositif tire-câble selon la revendication 6, caractérisé en ce que la course angulaire du barillet (34) entre la position de déblocage et la position de blocage, et vice-versa, dépend de la rigidité mécanique et du nombre de conducteurs de câble (14).

8. Dispositif tire-câble selon l'une des revendications 1 à 7, caractérisé en ce que la deuxième pièce de verrouillage (26) présente une longueur axiale inférieure à celle de la première pièce de guidage (24).

9. Dispositif tire-câble selon la revendication 1 ou 8, caractérisé en ce que la deuxième pièce de verrouillage (26) est solidarisée à la première pièce de guidage (24) par une liaison mécanique (28) fixe, les logements (36) de la deuxième pièce de verrouillage (26) étant formés par des encoches radiales semi-ouvertes, autorisant un vrillage par déformation manuelle du câble (14) dans l'intervalle (d) suite à son insertion dans une encoche du logement (36) avec un certain décalage angulaire.

10. Dispositif tire-câble selon la revendication 9, caractérisé en ce que le décalage angulaire est formé par un secteur séparant au moins deux ou plusieurs encoches de la deuxième pièce de verrouillage (26), alors que les deux pièces (26, 24) restent fixes durant le vrillage.
